# EUROPEAN PATENT SPECIFICATION

(11) **EP 2 278 296 B1**
(45) Date of publication and mention of the grant of the patent: **09.09.2015**
(21) Application number: 10170559.8
(22) Date of filing: 23.07.2010
(51) Int. Cl.: G01N 1/31, G01N 1/44, G01N 1/36

(54) **Single cavity tissue histology tissue-processor**
Histologie-Gewebeprozessor für Gewebe eines einzelnen Hohlraums
Processeur de tissus histologiques d'une seule cavité

(30) Priority: 24.07.2009 EP 09166319
(43) Date of publication of application: 26.01.2011
(73) Proprietor: Milestone S.r.l., 24010 Sorisole (BG) (IT)
(72) Inventor: Visinoni, Francesco, 24030, Mozzo Borghetto (BG) (IT); Bellini, Marco, 24128, Bergamo (IT)
(74) Representative: Rupp, Christian

(56) References cited:
- EP-A1- 0 822 403
- EP-A1- 1 605 243
- WO-A1-95/15671
- US-A1- 2001 043 884
- US-A1- 2001 051 365
- US-A1- 2005 090 017
- US-A1- 2006 275 861
- US-A1- 2008 013 592
- US-A1- 2008 220 468

## Description

### FIELD OF THE INVENTION

The present invention relates to the processing of organic tissue specimens that are subject to further investigation. More specifically, the present invention relates to processing of organic tissue specimens at least via a combination of microwave, and thermal treatments.

### BACKGROUND OF THE INVENTION

Pathology specimens for diagnostic, and for anatomy pathology are presently prepared according to a conventional method, that exemplarily comprises:

The tissue to be examined is first treated with formalin or a saline solution to stop the process of decay, and to stabilize the tissue so as to protect it against the physical and chemical rigors of processing.

The most recent pathology guidelines, in particular the ones regarding the restricted protocol for the breast tissue preparation, released by CAP (College of American Pathologists) and by the FDA (Food and Drug Administration) for the U.S. market prescribe that the tissues to be studied should not exceed spending a period of 48 hours fixation in formalin. This restriction results in a logistic problem for the laboratories that employ conventional methods, especially during weekends and holidays.

For example, if a breast specimen is received late on Friday afternoon, it cannot be prepared during the same day, but must stay in the fixative (formalin) before it will be completely processed on the following Monday morning. In cases like these, the exposure of the tissue to formalin is longer than 48 hours.

In a second step of the conventional method, the sample is dehydrated, i.e. some or all of the free water contained in the specimen being removed therefrom. During this procedure, various cellular components are as well dissolved by the dehydrating fluids, such as lipids, which are extracted, and water soluble proteins, which are dissolved in aqueous alcohols.

The third step includes the treatment of the tissue with another solvent, the so-called clearing agent (which also removes lipids). Clearing is the transition step between dehydration and infiltration with a supporting medium. Since many dehydrants are immiscible with said subsequently applied supporting medium, a solvent used is miscible both with the dehydrant and with the embedding medium to facilitate the transition between dehydration step and a subsequent infiltration step.

The last step in the processing of tissue specimens involves infiltrating the tissue cavities and cells with a supporting medium, such as a wax, and finally embedding the tissue in the medium which will provide sufficient external support during the ensuing processing.

The commercially available conventional tissue specimen processors employ the above described method and use only one retort for the complete tissue processing procedure, moving in and out during the sequence of reagents (up to 12) and during at least three sequences of liquid wax. The transfer of liquid melted wax, normally between 55 °C to 65 °C, through the liquid circuit and reagent valve is a critical technical point for the instrument's performance. If the users don't perform regular cleaning procedures and intensive preventive maintenance at least on this component of the conventional type units, their reliability is seriously compromised.

The conventional methods show, besides the ones highlighted above, a variety for other disadvantages, such as long processing times of the specimens, which may amount up to 50 hours per sample. Furthermore, large amounts of dehydrating agent(s) and clearing agent(s) have to be employed. In a normal procedure, the specimens are treated several times with the dehydrating agent, e.g. ethanol in rising concentrations (up to 100% ethanol), and subsequently several times with the clearing agent, in order to get rid of the dehydrating agent. Since large amounts of solvents have to be used, said solvents even being of high purity, the costs of such procedures are considerable.

A histoprocessing procedure that attempts to solve some of the disadvantages highlighted above, exhibiting shortened processing times is known from the article "The Two-Step Vacuum-Microwave Method for Histoprocessing" by M.E. Boon et al., European Journal of Morphology, Vol. 33, No. 4, 1995, pages 349-358. The histoprocessing method of organic tissues disclosed therein includes the steps of fixing the tissue, dehydrating the sample, clearing the sample and embedding the sample in paraffin, whereby the dehydration and clearing of the sample are carried out simultaneously in 100%-isopropanol, in a vacuum chamber heated by microwaves. Isopropanol is used in this step because it is both a weak dehydrator and a clearing agent. Temperature is controlled at 55°C and the pressure at 0,04 Mpa (400 mbar) such that the tissue can endure the hazards of the treatment without adverse affects.

Proprietary technologies attempt as well to solve some of the above highlighted disadvantages, like the ones embedded in the Pathos system (TM of Milestone SRL, Italy). Said technology exhibits a different sequence of processing steps for the pathology sample, such as starting with a step of lowering the rack of samples rack into a microwave cavity. A subsequent step of fixation-dehydrationclearing that involves at least the extraction of lipids and the substitution of water molecules with ethanol or isopropanol is then performed. Formalin is added and fixation is carried out at a selected temperature and time. The excess formalin is flushed out. Subsequently, a rinsing step with ethanol is ran to remove excess formalin. Ethanol is then added to carry out rapid dehydration of tissue, and subsequently ethanol is flushed out. Isopropanol is added and clearing is carried out. When using Milestone the solution, the last two steps mentioned above are condensed into one. The excess tissue solvents evaporate under vacuum. The dry rack is then transferred to a resistance, heated cavity with paraffin at temperatures of 65-75°C. While heating the cavity with an outside resistance, wax impregnation is carried out under preset vacuum/temperature conditions. Upon completion of the procedure, the apparatus will notify the operator with an audible/visual alarm. For tissue preservation, the rack remains in the molten paraffin until a manual command is given. The rack is unloaded for further processing. A new rack is loaded. A new rack can be loaded immediately as no cleaning cycle is required for continuous access.

While the above technologies exhibit shorter processing times and automated processing, they still exhibit drawbacks such as the above apparatus involves the use of at least two separate cavities, one being a microwave cavity and the second being a heating cavity outfitted with a resistance. The tissue processor still employs one retort for the complete tissue processing procedure, moving in and out the sequence of reagents (up to 12) and 3 sequence of liquid wax histology grade. The transfer of liquid melted wax, normally between 55°C to 65°C, through the liquid circuit and reagent valve leads to unwanted wax deposits on said valve and inside that circuitry. Without time consuming and disruptive regular cleaning procedures and intensive preventive maintenance, the reliability of these conventional units is seriously compromised. Further, the wax filling and drainage from the retort is not isolated from the reagent circuit, leading to unwanted mixtures and compromised reagent quality.

Further, both in the Pathos and in the conventional tissue processors, the reagents should be placed in containers arranged in a fixed sequence, because the processing protocols pick up the reagent based on their position. Further yet, the conventional systems do not address the added specific challenges involved in dealing with bone, brain or breast tissues. The above exemplary systems are not sufficiently flexible to adapt to laboratory needs and projected workflow.

US 2001/0051365 A1 shows a tissue processing unit having two subunits which can also be provided as a single unit, namely a microwave unit provided for sequentially submerging the tissue being processed in different solutions and exposing the tissue to microwave energy and an impregnator unit for carrying out impregnation of the tissue. EP 1 605 243 A1 shows a method and apparatus for microwave assisted tissue processing having two separated cavities, namely a wax cavity and a microwave cavity. US 2006/0275861 A1 shows an in situ heat induced antigen recovery and staining apparatus and method. EP 0 822 403 A1 shows a process for processing organic specimens.

In view of the prior art and its drawbacks, it is an object of the present invention to propose a technique of tissue specimens processing that further reduces the time necessary for their processing while maintaining the same high standards of accuracy of reading.

Said object is achieved by means of the features of the independent claims. The dependent claims develop further the central idea of the present invention.

According to a first aspect of the present invention, a system for processing tissue specimens is proposed. The system comprises at least a cavity comprising a sidewall and a bottom for processing the tissue specimens, and a fluid transfer system to transfer at least one of a plurality of fluids from a plurality of storage containers to the inside and out of said cavity, wherein the fluids comprise at least a reagent and molten wax. The cavity is connected to a microwave generating device for applying microwave radiation to an inside of the cavity, and a thermal energy generating device for generating a positive thermal energy gradient inside the cavity. Said thermal energy generating device is at least a resistive heating element functionally connected to said cavity, wherein said resistive heating element is provided within the sidewall of the cavity. The fluid transfer system comprises separate transfer systems for the wax and for the reagents to transfer at least one of a plurality of fluids from a plurality of storage containers comprising reagent containers and a wax storage container to the inside and out of the at least one cavity by directly pumping the fluid in and out of the at least one cavity, wherein by means of the separate transfer systems the used reagents are drained back to the respective container from which these have been sucked into the cavity or to a waste tank and the wax is returned to the wax storage container. The at least one cavity further comprises a dedicated drainage system for wax and a separate dedicated drainage system for reagents, each of said drainage systems comprises a U-shaped drainage hole within the sidewall of the cavity having the cavity external inlet/outlet and the cavity internal inlet/outlet of the drainage hole positioned at the bottom of the cavity.

Preferably said thermal energy generating device is independent from said microwave generating device.

Preferably said at least one resistive heating element is attached to the cavity, also provided within the bottom of the cavity.

Preferably said at least one resistive heating element has a cylindrical shape.

Preferably two resistive heating elements are provided within the wall of the cavity opposite to each other, and the two resistive heating elements extend along at least a part of the wall in a direction parallel to the longitudinal axis of the cavity.

Preferably four resistive heating elements are provided within the wall of the cavity equidistant to each other, and the four resistive heating elements extend along at least a part of the wall in a direction parallel to the longitudinal axis of the cavity.

Preferably two resistive heating elements are provided within the wall of the cavity opposite to each other and at least one further resistive heating element is provided within the bottom of the cavity, the two resistive heating elements within the wall extend along at least a part of the wall in a direction parallel to the longitudinal axis of the cavity.

Preferably the resistive heating element is a flexible resistive sheet attached to the outer wall of the cavity, preferably consisting of conductive silicon material.

Preferably the system further comprises a control unit for separately controlling the microwave generating device and the thermal energy generating device in order to achieve a desired temperature curve inside the cavity.

Preferably the cavity is made of aluminum.

Preferably a transfer device transfers a sample holder comprising said tissue specimens to the inside and out of said cavity, and said transfer device is a mechanical transfer device activated by foot pedal.

Preferably said wax is stored in the wax storage container adjacent to said cavity, and wherein said wax storage container stores said wax in melted state.

Preferably the wax drainage system is positioned in close proximity to the thermal energy generating device.

According to a further aspect of the present invention, a method for processing organic tissue samples for pathology purposes is proposed. The method for processing tissue specimens comprises transferring a tissue sample holder of a plurality of tissue specimens to a cavity comprising a sidewall and a bottom by means of a device, closing the cavity with a cover coupled to said tissue sample holder, processing the plurality tissue specimens in the cavity, selectively transferring at least two fluids by means of a fluid transfer system comprising separate transfer systems for the wax and for the reagents from a storage container in and out of the cavity, the fluids comprising at least a reagent from a reagent storage container and wax from a wax storage container, by sequentially pumping directly in and out of the cavity, applying microwave radiation and thermal energy produced by resistive heating to the inside of the cavity by means of a microwave generating device and a resistive thermal energy generating device which is provided within the sidewall of the cavity being connected to the cavity, wherein by means of the separate transfer systems the used reagents are drained back to the respective container from which these have been sucked into the cavity or to a waste tank and the wax is returned to the wax storage container, and wherein the cavity further comprises a dedicated drainage system for wax and a separate dedicated drainage system for reagents, each of said drainage systems comprises a U-shaped drainage hole within the sidewall of the cavity having the cavity external inlet/outlet and the cavity internal inlet/outlet of the drainage hole positioned at the bottom of the cavity.

Preferably the method further comprises the step of generating a positive energy gradient inside the cavity during a ramping up step of a desired temperature curve employing microwave radiation.

Preferably the method further comprises the steps of measuring the current temperature inside the cavity and employing thermal energy generated by the thermal energy generating device simultaneously to the microwave radiation in case that the measured temperature is lower than the temperature of the desired temperature curve.

Preferably by transferring a tissue sample holder of a plurality of tissue specimens to a cavity by means of a device said tissue transfer holder is transferred directly into the wax storage cavity through said dedicated door.

Preferably while a first tissue sample holder of a plurality of tissue specimens is transferred into said wax storage cavity a second tissue sample holder of a plurality of tissue specimens is transferred into said microwave cavity, thereby facilitating parallel processing of said first and second plurality of tissue specimens.

Preferably a protocol processing time for said second tissue sample is shorter than a protocol processing time for said first tissue sample.

Preferably a software program monitoring said processing is a dual processing software that monitors and processes at the same time the processing of the at least first and second protocol processing.

The processing the plurality of tissue specimens in the cavity involves sequentially pumping directly in and out of the cavity at least two fluid reagents for processing the tissue specimens, while microwave radiation is applied inside the cavity during the presence of at least one of the reagents in the cavity in order to generate a first positive temperature gradient in the reagent present, and a second positive energy gradient inside the cavity is generated by employing said thermal energy generating device. The positive energy gradient inside the cavity can as well be generated during a ramping up step of a protocol curve simultaneously employing microwave radiation and thermal energy generated by the thermal energy generating device. The processing of tissue specimens in the cavity further comprises fixing the tissue specimens with formalin or formalin substitutes such as alcohol/glycol base fixatives under microwave irradiation and magnetically driven stirring of reagents, rinsing the tissue specimens with alcohol or saline solution at ambient temperature under normal pressure, dehydrating the tissue specimens with one alcohol or a mixture of different alcohols under microwave irradiation and magnetically driven stirring, clearing the tissue specimens under microwave irradiation and magnetically driven stirring of the reagents, evaporating excess reagents from the tissue specimens under programmable vacuum conditions, and impregnating the tissue specimens under programmable vacuum and under magnetically driven stirring with a impregnation medium. The dehydration and clearing steps may be carried out simultaneously under microwave irradiation, resistive heating, and stirring of reagents for temperature homogeneity with a mixture of ethanol plus isopropanol plus a long-chain hydrocarbon for applications with fatty or very fatty tissues.

During the processing step, both thermal energy and microwave power are applied into the cavity, and the pressure in the cavity can be reduced. The fluid reagents are pumped from storage containers into the cavity by creating vacuum in the cavity. The impregnation medium is applied under vacuum.
In a particular exemplary embodiment of the present invention, all the processing steps are carried out in the cavity that doubles both as microwave/thermal energy cavity. The samples are loaded in the cavity that may be subjected to both microwave and thermal energy. The reagents are sequentially pumped in the first cavity to complete the fixation, dehydration and clearing steps, followed by a drying step performed under vacuum and wax impregnation. The wax is pumped in the activity from a separate cavity where the wax is kept melted. According to a further exemplary aspect of the invention, a first batch of samples is loaded in a first cavity that may be subjected both to microwave and thermal energy. Within the cavity fixation, dehydration, clearing and drying of the test samples is carried out employing at least one of said energy sources, thermal and microwave. Said samples may be upon completion of the above steps transferred manually to the second wax cavity, comprising melted wax, to complete the impregnation phase of said samples with wax, under vacuum. While the batch is in the wax cavity, a second batch of samples is loaded in the first cavity to be subjected both to microwave and thermal energy and to carry out the fixation, dehydration, clearing and drying of the samples under vacuum, employing at least one of said energy sources. The first samples batch must complete the wax impregnation step in the second cavity before the second samples batch completes the reagents/drying steps in the first cavity. Therefore, a processing protocols time for the second run cannot be shorter than the processing time for the first run. The two protocols processing times must be of equivalent time length or the second processing time for the second protocol must longer than the first. At the completion of the wax impregnation in the second cavity, the first samples batch is removed from the wax. The second samples batch can complete the wax impregnation phase, in the second cavity, where the samples have been manually transferred. At this time, should need be, a third set of samples may be inserted into the first cavity to continue the parallel processing.

According to a further aspect of the present invention, the use of a method as set forth above is proposed for processing organic samples, both of human or animal origin, but not limited to said categories as they may be expanded to plant tissue, etc.

According to a further yet aspect of the present invention, a computer program operating on the system of the present invention practices the method of the present invention.

Further features, advantages and objects of the present invention will became evident for the person skilled in the art when reading the following detailed explanation of an embodiment of the present invention taken in conjunction with the figures of the enclosed drawings.

Embodiments are also directed to apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed to methods by which the described apparatus operates. It includes method steps for carrying out every function of the apparatus.

### BRIEF DESCRIPTION OF THE DRAWINGS

The foregoing form as well as other forms, features and advantages of the invention will become further apparent from the following detailed description of the embodiments, read in conjunction with the accompanying drawings. The detailed description and drawings are merely illustrative of the invention rather than limiting, the scope of the invention being defined by the appended claims.
Fig. 1 shows an exemplary device for carrying out the present invention.
Fig. 2 is a schematic representation of the exemplary tissue processing device which can be used for carrying out to the present invention.
Fig. 3 is a flowchart representing the functionality of a system according to the present invention.
Fig. 4 shows in further detail the exemplary device for carrying out the present invention.
Fig. 5 another exemplary device for carrying out the present invention.
FIG. 6 shows a screenshot of software operating on a tissue processing device in accordance with one embodiment of the present invention.
FIG. 7 shows a further screen shot of a software operating on a tissue processing device in accordance with another embodiment of the present invention.
FIG. 8 shows a further yet screen shot of a software operating on a tissue processing device in accordance with another embodiment of the present invention.
FIG. 9 shows another screen shot of a software operating on a tissue processing device in accordance with another embodiment of the present invention.
Fig. 10 shows a vertical cross-section of the cavity according to the present invention.
Fig. 11 shows a perspective side-top view on a cavity according to the present invention.
Fig. 12 is a flowchart representing the process step during the initial phase of the method.
Fig. 13 is a protocol curve for controlling the temperature within the cavity.
Fig. 14 is a vertical cross-section along a wall of the cavity.
Fig. 15 is a side-bottom view of the cavity according to the present invention.

### DETAILED DESCRIPTION OF THE INVENTION

Reference will now be made in detail to the various embodiments of the invention, one or more examples of which are illustrated in the figures. Each example is provided by way of explanation of the invention and it is not meant as a limitation of the invention. For example, features illustrated or described as part of one embodiment can be used on or in conjunction with other embodiments to yield yet a further embodiment. It is intended that the present invention includes such modifications and variations.

Within the following description of the drawings, the same reference numbers refer to the same components. Generally, only the differences with respect to the individual embodiments are described. Without limiting the scope of protection in the following description the components thereof will exemplarily be referred to either as discussed in the appended legend of the elements or by an appropriate synonym. A person skilled in the art will know what is meant by either the elements or their equivalents.

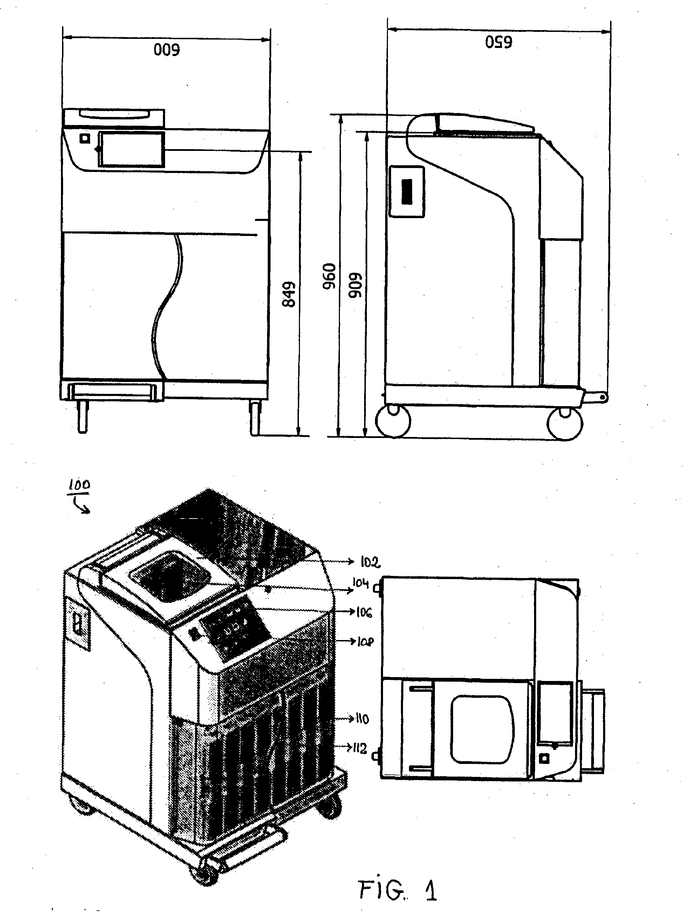

Fig. 1 shows an exemplary device for carrying out the present invention.

The system for processing tissue specimens 100, illustrated in Fig. 1, is shown in the figure either in perspective and with a front, side and top view. The sizes denoted on the various views are only exemplary in nature and are not meant to restrict in any way the actual implementation of the system 100.

The system for processing tissue specimens 100 comprises at least a cover 102 that provides microwave-proof and fluid-proof seal to a cavity for processing tissue specimens 104. For facilitating the user operation of the system for processing tissue specimens 100, the system is outfitted at least with a control panel 106 and with an on/off button 108. Control panel 106 may be with a touch screen implementation and will allow a user to select a desired protocol upon loading the tissue specimen samples. The control panel 106 is aimed to be implemented with user friendly software and it will be an advanced touch terminal. The user will enter the number of loaded cassettes with tissue samples in order to execute the appropriate protocol. A main start-up screen may be customized to display the user's favourite, most utilized programs ready for immediate selection and start (up to 16 programs). Further, the embedded software enables the reagent management, by software controlled transfer of processing reagents, eliminating therefore the need for manual reagent handling. This results in an additional increased safety feature embedded in the system of the present invention. Further, additional advantages for the control panel 106 might be identified, such as enabling running of software that allows simple customization of preset programs, enables fully automatic control of process parameters (temperature, time, agitation, vacuum, power), allows programmable "delayed start" time for pre-heating of wax, and allows programmable "delayed start" time for after-hours operation, to name only a few of its inherent advantages.

The system 100 illustrated in Fig. 1 is provided with a front access door 112 that opens sideways to allow the operator access to a plurality of removable reagent containers 110. The system is in no way limited to having a front access door 112, since this is merely a design choice. The reagent container 110 may be located on a pull out drawer that allows the operator to easily replace the spent reagent tanks and containers and also to have access to a waste tank (not shown) and service said tank. Access to a wax chamber (not shown) could as well be envisioned through this front loading access door, but the wax can be used repeatedly for periods of up to several months at least, not requiring a regular change, other than the occasional top-up for wax absorbed by the tissue samples. The wax storage container is fixed and has a concealed drainage outlet tap attached at the front. The drainage tap may be accessed as well by opening the unit's front panel cover (single access key movement). A bayonet connector with a long drainage tube is attached to the tap, allowing the wax to be drained by gravity feed into a container. Replacement wax is added directly into the wax retort.

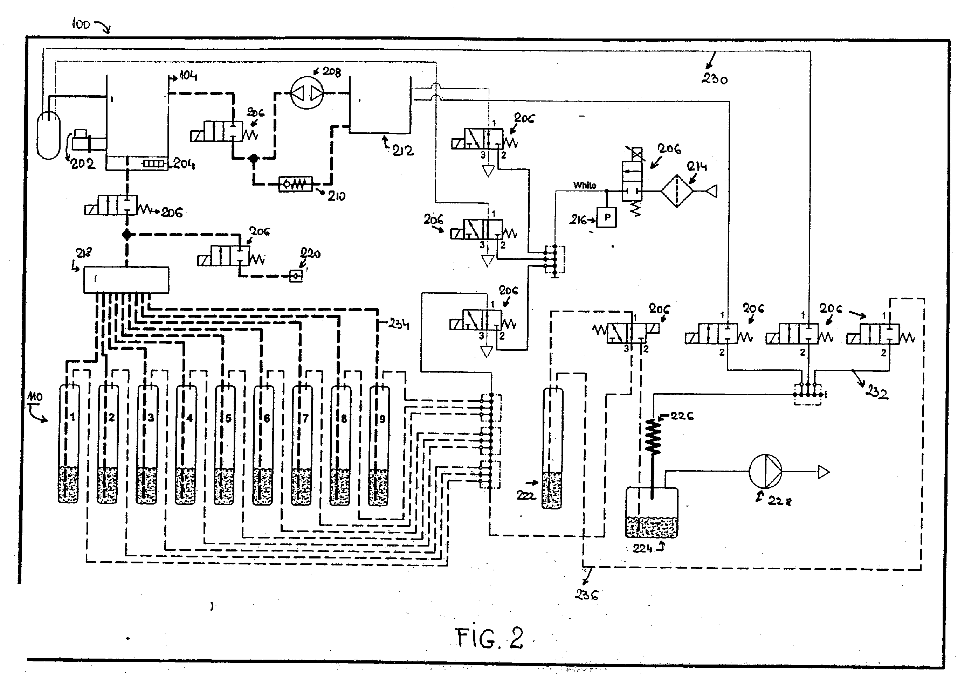

Fig. 2 is a schematic representation of the exemplary tissue processing device which can be used for carrying out to the present invention.

As shown in the figure, system 100 comprises a cavity 104, for example made from stainless steel. The cavity is heated by coupling microwave radiation from a radiation source 202 and via one or more resistive cavity thermal energy generating device(s) 204, functionally connected for example to the wall and/or bottom of the cavity 104. The cavity may comprise several resistive cavity thermal energy generating (heating elements) provided respectively at different positions in the cavity, and optionally being of different natures. The cavity 104 is used to perform therein several of the sequential steps of the tissue preparation process as defined in the introductory portion of the specification. The resistance heating in the cavity is also used during the reagent steps to accelerate the ramping step of the temperature protocol curve, with employing combined microwave energy and conductive heating.

In order to carry out several different steps of the tissue preparation process sequentially within the same cavity 104, the cavity 104 is designed such that one or more, essentially different fluids from containers 110 (1 to 9) are selectively transferred into and drained from the cavity 104. Although usually fluids from different storage containers are used sequentially, in some cases also a mixture of fluids from different storage containers can be used. The cavity 104 may provided with ultrasonic level sensor(s) (not shown) that indicates that a fill up of appropriate level of reagent has occurred, level that is determined by the processing software according with the number of specimens processed.

Cavity 104 is as well connected via fluid circuitry tubing and adjuvant elements, such as valves 206, gear pump 208, and by-pass 210, to a wax storage container 212. During the step of infiltrating the tissue cavities with a support medium, the wax, that is stored in the wax container 212 at a temperature between 55 and 65 degrees Celsius in melted state, is pumped in the cavity 104. The excess wax and the flushed out wax are returned to the wax storage container 212. The wax is a histology paraffin grade wax, specifically suitable for the final infiltration step and it will be reused several times before discarded.

Alternatively, as it will be further discussed in connection with another embodiment of the present invention, the wax storage container can be used as second cavity for in a dual/parallel processing modality that will be described further in detail further in the present document for the present invention.

The commercially available conventional tissue processors employ one retort for the complete tissue processing procedure, moving in and out the sequence of reagents (up to 12) and 3 sequence of liquid wax histology grade. The transfer of liquid melted wax, normally between 55°C to 65°C, through the liquid circuit and reagent valve is a critical technical point for the instruments' performance. If the users don't perform regular cleaning procedure(s) and intensive preventive maintenance on these conventional type units, their reliability is seriously compromised.

To improve the wax filling and drainage from the cavity and to keep it isolated from the reagent circuit, a gear pump 208 or a mixing station is allocated between the cavity 104 and the wax storage contained 212. The gear pump 208 can easily distil the liquid wax in the wax storage container 212 avoiding clough or occlusions due to non perfectly melted wax residues.

These processes, as well as other processes within the system for processing tissue specimen, are controlled via an electronic board (not shown) functionally connected with the control panel 106. For the pumping and draining process of cavity 104 the electronic board controls valves 206 (respectively one for each of the containers 110, or a rotary valve 218), and a vacuum pump 228 for creating vacuum in the interior of cavity 104 in order to suck out the selected fluid from any or several of the containers 110.

Before carrying out the corresponding histoprocessing step, a fluid from any of the containers 110 is transferred into the cavity 104. Then one of the sample preparation steps is carried out under application of microwave power from the microwave source (if needed), and subsequently the fluid used for the specific step is drained from the cavity 104 either passively via gravity force, or actively with the application of vacuum into the containers. The used fluid from the cavity 104 is drained back to the respective container 110 from which it has been initially sucked into the cavity 104 or directly to a waste tank 222. Usually, a fluid can be used for several cycles of the tissue specimens processing.

Microwave sensors (not shown) are normally positioned in microwave instrumentation outside the microwave chamber to detect eventual electromagnetic leakages. Normally these sensors are located close to the most sensible point, that is the microwave chamber opening. The system of the present invention proposes that a microwave leakage sensor is also built in the cavity wall inside the cavity. The sensor is an extra safety device for the tissue specimens protection. Its purpose is to detect inappropriate microwave release during the steps in vacuum or during reagent transfer. A dedicated software program and hardware activate/deactivate the sensor according to the processing steps to be monitored. The system of the present invention further proposes at least one sensor for avoiding accidental microwave release in the cavity when the reagent is not properly loaded.

The tissue specimens to be processed are held in a rack (not shown) having for example 210 specimens holders (cassettes), respectively one for each sample. The rack is functionally connected to a cover 102 for the cavity 104. When the rack is inserted into the cavity 104, the cover 102 will close the cavity 104 in a microwave-leak-proof and fluid proof fashion, when the rack is entirely inserted into the cavity 104. Note that the rack, when entirely inserted, has some clearance to the bottom wall of the cavity, most especially if the position chosen for the cavity thermal energy generating device 204 is at the bottom of the cavity 104. The transfer of the rack attached to the cover 102 in and out of the cavity 104 is carried out manually or by a foot pedal mechanism.

Once all necessary tissue processing steps using a certain fluid have been performed, the fluid is pumped out. Prior to the wax impregnation the samples are subjected to vacuum drying in the cavity 104, in the absence of fluid to remove superficial fluids from the tissue's surface and part thereof from within the samples. This vacuum drying step may be performed with or without microwaves and with and without resistive heating. The processing is then completed with the tissue processed for example being impregnated using wax.

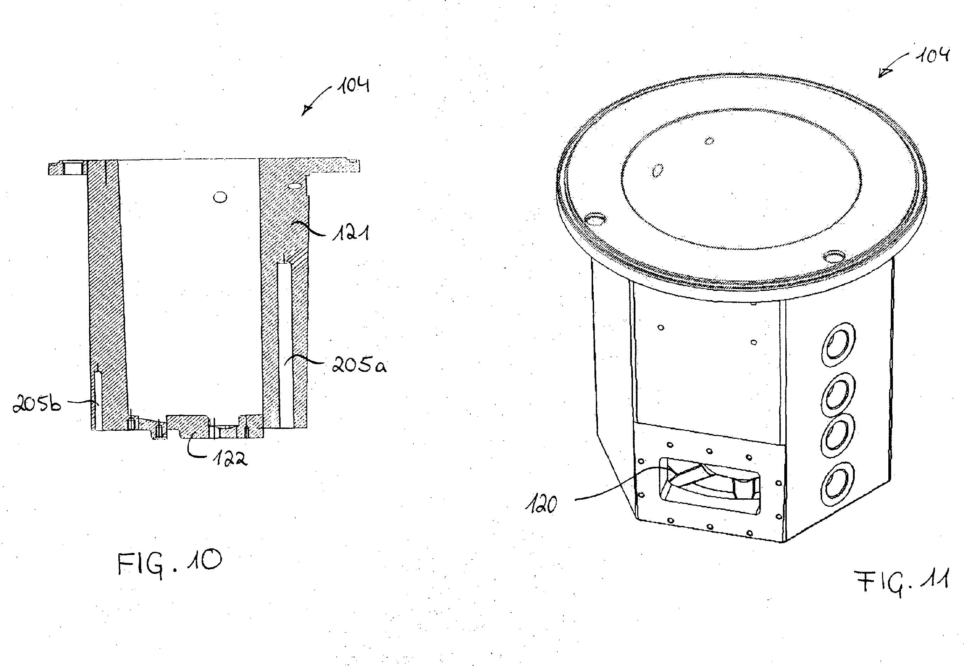

In order to promote and accelerate the impregnation step, vacuum can be applied to the cavity 104 via the vacuum pump 228. As soon as the impregnation step is finalized, the samples held in the rack are moved outside by the operator through the foot pedal mechanism and can then be used for further investigation procedures. The sample rack comprises several layers of juxtaposed specimen cassettes. The detailed configuration of the cavity will be explained later on with reference to fig. 10 to 14.

With regards to the design of removable reagent containers 110, they are designed such that allow a better flexibility for processing protocol, compared for example with either the automated unit or the standard conventional histology tissue processors. In the known automated and in the conventional tissue processors, the reagent should be placed in the container with a fix sequence, because the processing protocols pick up the reagent based on their position.

The present invention proposes a new reagent container configuration and a new unit software management tool that allow the user to allocate the different reagents used during the processing protocol, in any of the front containers.

The tissue specimen processing system comprises up to 10 front containers to accommodate at least 1 fixative, 2 alcoholic rinses or saline solution, 1 dehydration reagent (preferably Ethanol reagent grade alcohol), 1 clearing reagent (preferably Isopropanol reagent grade alcohol) and 1 waste for vapours trap.

The rest of the containers can be used to allocate extra alcohols, in order to reduce the number of exhaust reagents replacements, or to add other solutions, in order to create additional procedures as indicated below. This reagent flexibility is obtained by the dedicated software, that is able to load the correct reagent using the correspondent name of the step of the protocol in use and not by using a numeric sequence, from the first container to the last, as adopted in the conventional tissue processors.

The reagent flexibility allows laboratories to comply with the most recent pathology guidelines, in particular with the restricted protocol for the breast tissue preparation, released by CAP/ASCO (College of American Pathologists/American Society of Clinical Oncology) and by the FDA (Food and Drug Administration) for the US market. The new CAP/ASCO guidelines strictly recommend that samples do not exceed the 48 hour fixation in formalin. This restriction could result in a logistic problem for the laboratory in occasion of the weekend or in occasion of holidays. In these situations, if a breast tissue specimen is received late on Friday afternoon, it cannot be prepared during the same day, but it must stay in the fixative (formalin) before to be completely processed on the following Monday morning. In this case, the exposition to the tissue in formalin is longer than 48 hours. With reagent flexibility, the user can create a post-fixative step using saline solution, or 70% Ethanol alcohol to move the tissues from formalin after the 48 hour and before the rest of the processing protocol starts.

The number of necessary cavities for carrying out all necessary sample processing steps therefore, according to the present invention, can be reduced to one since all the steps, including the impregnation step, can be carried out within the same cavity 104 that may be subjected both to thermal and microwave energy. Time and space can be saved by the fact that while different subsequent processing steps are carried out in the same cavity 104, the samples can remain in said cavity and no intermediate transfers are necessary. While the samples remain within the cavity 104, the necessary fluids from the storage containers 101 are sucked in and drained, respectively. Time is also saved, compared to conventional heated histoprocessing systems, by application of microwave irradiation in combination with resistive heating.

Although the cavity 104 is functionally connected to a microwave generating device and heat generating device, it is not necessary to apply microwave power or heat, concomitantly and they may be applied separately, during the processing steps carried out in the cavity. The pressure in the cavity can be reduced by using the vacuum pump 228 during any of the tissue processing steps carried out in the cavity 104. The typical steps carried out in the cavity 104 are the steps of fixation, alcohol rinsing, dehydration, clearing and/or vacuum evaporation of the samples.

Although not shown in Fig. 2, the embodiment of the invention is provided with a substantial number of additional safety and sensor devices, some of which have already been mentioned earlier in the document. Specifically, temperature sensors might be provided, either for detecting the temperature within the wax storage container 212, and being placed either at the bottom or laterally at the wall of the wax storage container, or for detecting the temperature of the wax within the cavity 104, again preferably incorporated within the walls of the cavity. A plurality of stirring devices might as well be provided both for the cavity 104 and for the wax storage container 212, which may be activated magnetically. The rotation of the stirring devices is electronically controlled by a dedicated electronic board. A safety device for ensuring a proper closing of the cover 102 on the top of the cavity might as well be provided.

The several electronic boards as well as a user interface/control panel 106, which can be a touch screen terminal, are connected by communication cable(s). Also, wiring (not shown) connects the electronic boards with all connected sensors and devices. An electronic board might be specifically designated to operate and control the heating of the cavity. A plurality of valves 206 might be electro/pneumatic valves which are used to distribute compressed air from a compressor (having an air container and being controlled by the electronic board). Silicone tubing 230 dedicated for the vacuum circuitry connects the condenser and compressor with at least the cavity and wax storage container 212. The valves 206 might be controlled by micro-controllers installed on the electronic board. Electric valve control the communication of the vacuum pump 228 and the cavity 104, wherein said electric valve is controlled by the micro-controller installed on the electronic board. An electric valve is provided as well for the communication between the vacuum pump 228 and the in-used reagent storage containers 110. A pressure sensor for the absolute pressure in the vacuum circuitry might also be provided. The output value of the pressure sensor is supplied to the electronic control board to control the vacuum in the vacuum circuitry.

A circuitry for the communication between the electronic board and the connected sensors, valves and devices, an electric valve to allow air from the atmosphere (fresh air) to get into the manifolds, pneumatic valves for opening respectively one of the associated storage containers, a pneumatic valve for the communication between the manifolds and the cavity might as well be provided. A plurality of pneumatic valves respectively opening and closing tubes for loading new fluid reagents and unloading exhausted fluid reagents, a level sensor checking the presence and the level of a fluid reagent in the loading tube, level sensors respectively responding to difference levels of fluid reagents in the cavity 104 as well may be provided. A plurality of temperature sensors are provided for reading the cavity temperature of cavity 104 at different positions and being placed either at bottom or laterally at the wall of cavity 104. A plurality of safety switches detecting a properly microwave and fluid sealed closure of the opening of the cavity 104 by the cover 102 may be provided. A person skilled in the art will be aware of various other elements provided in the configuration of the embodiment in order to provide for safety and monitoring functions.

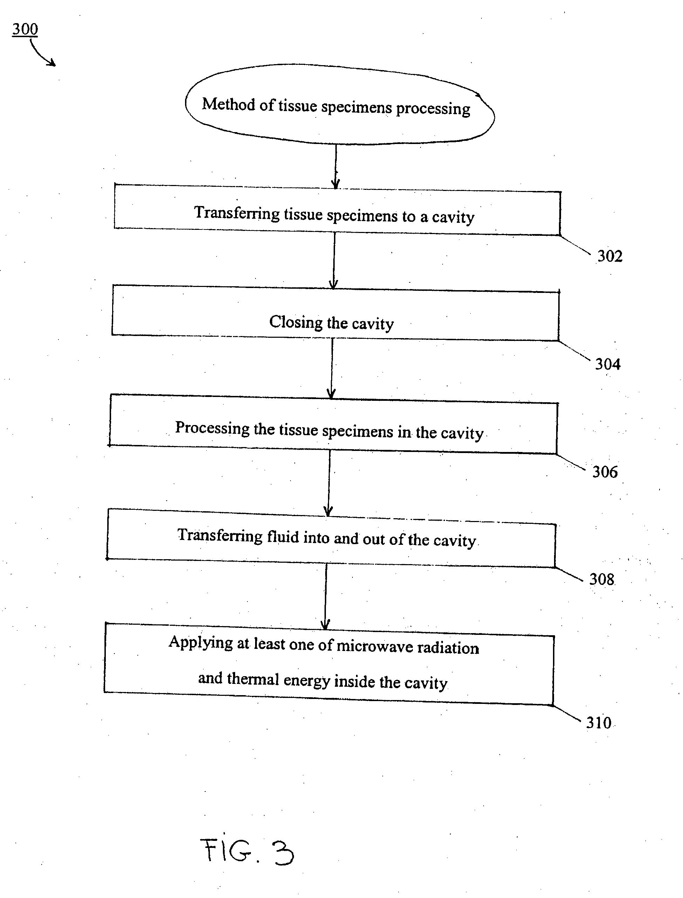

In accordance with the novel method proposed by the present invention for processing tissue specimens, and illustrated in the flow chart of Fig. 3, a tissue sample holder of a plurality of tissue specimens is transferred to a cavity by manual means or by a device. The cavity is closed with a cover coupled to the tissue sample holder. The plurality tissue specimens are processed in the cavity. A fluid or a mixture of fluids is selectively transferred by means of a fluid transfer system from a storage container in and out of the cavity, and microwave radiation and thermal energy are transferred to the inside of the cavity by means of a microwave generating device and a thermal energy generating device being connected to the cavity. In a particular exemplary embodiment of the present invention, all the processing steps may be carried out in the cavity that doubles both as microwave/thermal energy cavity. The samples are loaded in the cavity that may be subjected to both microwave and thermal energy. The reagents are sequentially pumped in the first cavity to complete the fixation, dehydration and clearing steps, followed by a drying step performed under vacuum and wax impregnation. The wax is pumped in the activity from a separate cavity where the wax is kept melted.

The processing of the plurality of tissue specimens in the cavity involves at least sequentially pumping directly in and out of the cavity at least two fluid reagents for processing the tissue specimens. The microwave radiation is applied inside the cavity during the presence of at least one of the reagents in the cavity, in order to generate a first positive temperature gradient in the reagent present, and a second positive energy gradient inside the cavity is generated by employing the thermal energy generating device. Alternatively, a positive energy gradient inside the cavity is generated during a ramping up step of a protocol curve simultaneously employing microwave radiation and thermal energy generated by the thermal energy generating device.

During the processing of tissue specimens in the cavity the tissue specimens are fixed with formalin under microwave irradiation and magnetically driven stirring of the reagents. The tissue specimens are rinsed with alcohol at ambient temperature under normal pressure followed by dehydrating the tissue specimens with one alcohol or a mixture of different alcohols under microwave irradiation and magnetically driven stirring. Further, the tissue specimens may be cleared under microwave irradiation and magnetically driven stirring of the reagents by evaporating excess reagents from the tissue specimens under programmable vacuum conditions. The tissue specimens are impregnated under programmable vacuum and under magnetically driven stirring with a impregnation medium, such as wax.

The dehydration and clearing steps are carried out either by a simultaneous dehydration/clearing under microwave irradiation, resistive heating, and stirring of reagents for temperature homogeneity with a mixture of ethanol plus isopropanol plus a long-chain hydrocarbon for applications with fatty or very fatty tissues. During the evaporation step, both thermal energy and microwave power may be applied into the cavity, and the pressure in the cavity is reduced. The fluid reagents are pumped from storage containers into the cavity by creating vacuum in the cavity. The impregnation medium may be applied under vacuum.

According to the present invention each of the cavities can be heated by applying microwave radiation to the inside of the cavity and by applying thermal energy to the inside of the cavity. The thermal energy generating device according to the present invention preferably is implemented as at least one resistive heating element functionally connected to the cavity.

The system of the present invention further comprises a control unit which is adapted to control the microwave generating device as well as the thermal energy generating device so as to apply either microwave radiation, resistive heating or both to the cavity.

One embodiment how the thermal energy generating device can be implemented according to the present invention is shown in fig. 10. Fig. 10 shows a vertical cross-section of the cavity 104. The cavity comprises a sidewall 121 and a bottom 122. In this embodiment two resistive heating elements 205a, 205b are included within the sidewall 121 so as to transfer thermal energy to the inside of the cavity 104. In the embodiment shown in fig. 10 the resistive heating elements 205a, 205b are provided opposite to each other and extend along at least a part of the wall in a direction parallel to the longitudinal axis of the cavity 104. In the embodiment shown in fig. 10, the resistive heating elements have a different size, but there can also be used resistive heating elements having the same size. Further, the position within the sidewall 121 can be symmetrical or different for some or all of the resistive heating elements.

However, the present invention is not limited to the configuration shown in fig. 10.

There can be provided one, two, three, four or more resistive heating elements, which are attached to the cavity, provided within the wall 121 of the cavity 104 and/or provided within the bottom 122 of the cavity 104. In one preferred embodiment the resistive heating element has a cylindrical shape, but also a rectangular or any other shape can be used.

Two resistive heating elements can be provided within the wall 121 of the cavity 104 opposite to each other and preferably they extend along at least a part of the wall in a direction parallel to the longitudinal axis of the cavity.

In another embodiment, four resistive heating elements can be provided within the wall 121 of the cavity 104 equidistant to each other. It is possible that also in this case the four resistive heating elements extend along at least a part of the wall in a direction parallel to the longitudinal axis of the cavity.

In a further embodiment in addition to the resistive heating elements provided within the wall 121 of the cavity 104, additional resistive heating elements can be provided within the bottom 122 of the cavity.

More concretely, according to a preferred embodiment of the invention, in the cavity 104 two cylindrical resistive heating elements are employed and placed vertically and symmetrically to each other in the cavity wall 121. Preferably, the resistive heating elements each have 325 W for a total of 650 W. The dimensions preferably are 160 mm in height and 12.5 mm in diameter and preferably are combined with a cavity having the following preferred dimensions. The preferred cavity of the present invention has an external hexagonal shape. Preferably the maximum external diameter is 310mm, the average external diameter is 270mm, the internal diameter is 195mm, the average wall thickness is 37,5mm, the internal height is 265mm and the external height is 290mm. From these parameters a preferred relationship in size between the cavity and the resistive heating elements becomes evident. However, the present invention is not limited to the described preferred embodiments of resistive heating elements and/or cavity and/or the relationship in size between cavity and resistive heating elements.

Alternatively in the case of using four resistive heating elements, the elements may have a size of 130 mm x 12.5 mm of 162.5 W each, all of them placed vertically in the cavity wall 121 or otherwise two within the wall and two placed horizontally in the cavity bottom 122. Preferably, a cavity having the same dimensions as described for the previous embodiment is used.

Preferably, the resistive heating elements are of the type of cartridge heaters. The resistive heating elements comprise a heater element preferably made of a combination of 80% Nickel and 20% Chromium and a resistive wire. Preferably, a protective outer cover covering the heater element is provided and made of stainless steel. The protective cover can be provided in the form of a stainless steel sleeve. As heater insulation Magnesium oxide MgO is used.

Due to the vertical position of the resistive heating elements, i. e. due to the extension along at least a part of the wall in a direction parallel to the longitudinal axis of the cavity 104, it is possible to provide a uniform heat transfer to the ingredients within the cavity. Specifically in the case of application of wax it is important to keep a constant high temperature in order to keep the wax in fluid form.

As an alternative to the resistive heating elements placed within the wall and/or the bottom of the cavity 104, there can also be used resistive heating elements or heating plates which are applicable to the external of the cavity 104. Different types of plates can be used, but since the cavity 104 has an irregular external shape preferably a flexible resistive sheet is used which can easily adapt to the outer shape of the cavity and still provide a tight contact between the plate and the cavity. In case of using external heating elements, the elements are placed to the cavity in such a way that a uniform heating between the lateral wall and the basement of the cavity is achieved. The flexible plates can be preferably made of a conductive silicone material.

Fig. 11 further shows a perspective view of the cavity 104 which on one sidewall 121 has an inlet 120, i. e. a microwave guideline entrance in order to properly guide the microwave radiation to the inside of the cavity 104.

The system of the invention adopts simultaneous microwave and resistive heating elements to the reaction chamber in order to reduce in particular the time of the first phase of the temperature protocols. According to a preferred embodiment, microwave radiation is applied as primary source and the resistive heating element is used as secondary source of energy in case the primary microwave energy is not enough to follow the preset temperature profile of the processing protocol.

The control unit can therefore select independently the two sources of energy as unique method of heating or combine the two sources.

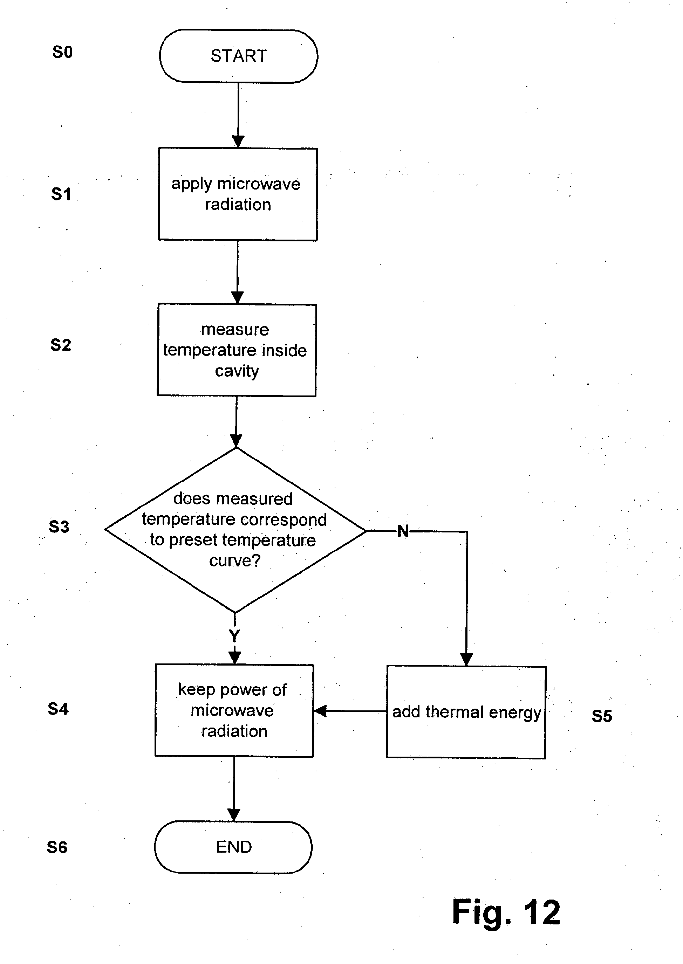

Specifically, during the ramping up of the temperature curve, i.e. during the initial phase of the process, it is advantageous to use both energy sources. This is shown with reference to fig. 12. The process starts in step S0. In step S1 microwave radiation is applied. In step S2 the temperature inside the cavity is measured by means of a corresponding temperature sensor. In step S3 it is checked whether the measured temperature corresponds to the preset temperature curve. If this is the case, then in step S4 the power of the microwave radiation is kept. Otherwise, in step S5 the thermal energy is added as secondary heating source and additionally the process continues with step S4 where the power of microwave radiation is also kept. The ramping up process ends in step S6 when the final desired temperature is reached. It is to be noted, that during the ramping up process the measured temperature will usually be below the desired temperature. However, there can be included a further step to decide in a case of deviation of the measured temperature from the desired temperature, whether the measured temperature is higher or lower than the desired temperature. In case that the measured temperature is higher than the desired temperature, the microwave power and/or the additional thermal energy power can be reduced.

According to the present invention therefore two sources of energy, i. e. microwave and a conventional source, are selected to run simultaneously the single steps of the processing protocol, whereby the microwave radiation is started as primary heating element. If the temperature profile indicates that more energy is needed to follow the pre-set curve, the resistive heating element is turned on for additional heat. The control unit can include a specific software which can be set to switch on the second heating source if the power required is over a specific percentage, for example set between 70 and 80%. This particular combination of heating is specifically of high importance in the first part of the temperature profile, where normally a reagent is at ambient temperature and needs to be raised to the processing temperature in the shortest time possible.

The microwave radiation hereby is an immediate source of heating while the resistive element has a much slower conductive heat transfer. Therefore, the two heating sources can be combined effectively together in order to provide the correct temperature profile. Specifically, in addition to or instead of measuring the actual temperature, the temperature curve from the previous temperature behavior can be anticipated and the protocol controlling the microwave energy and the resistive heating element can be adapted accordingly in order to avoid an overshoot of the temperature.

The present invention as a key element provides a specific cavity with a specific geometry allowing on one hand to direct the microwave into the cavity and to have a correct microwave distribution but which on the other hand can as quickly as possible conduct heating energy from the resistive element to the reagent in the container. With the proposed geometry as shown in figs. 10 and 11 and as previously explained, both energy sources can be effectively used together.

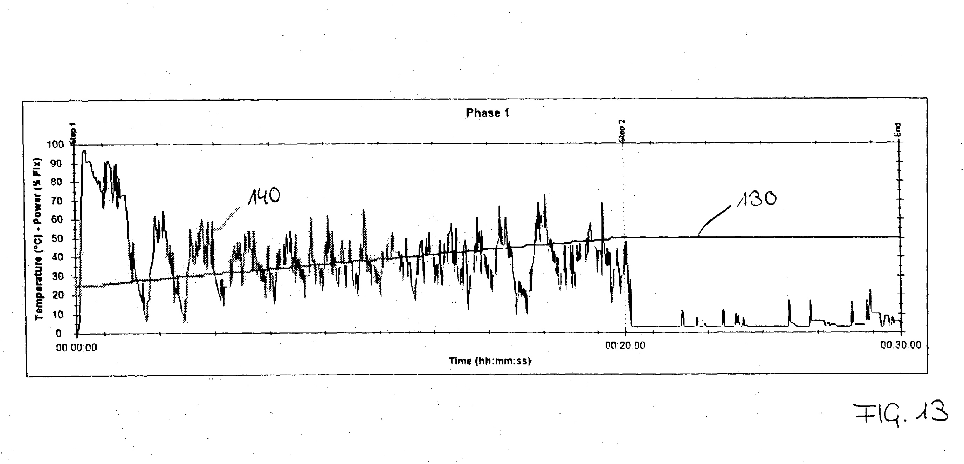

Fig. 13 shows an example of such a temperature protocol. On a vertical axis hereby the temperature is shown as well as the power applied by the heating sources. On the horizontal axis the time is indicated. The preset temperature curve 130 indicates the desired temperature. A further temperature curve, which cannot be seen in the present example, since it overlaps with the preset temperature curve 130 indicates the measured temperature within the cavity. The power curve 140 indicates the power applied via the heating elements. As can be seen in the ramping up phase, i. e. until about 20 seconds, a very high power is applied. After the temperature curve has reached its plateau, the energy can be reduced in order to maintain the desired temperature.

The present invention further provides the possibility to apply a plurality of fluids such as reagents, wax and alcohol to the tissue to be processed inside the cavity. According to the present invention, hereby separate transfer systems for the wax and for the reagent are provided. This avoids a contamination of wax and reagents.

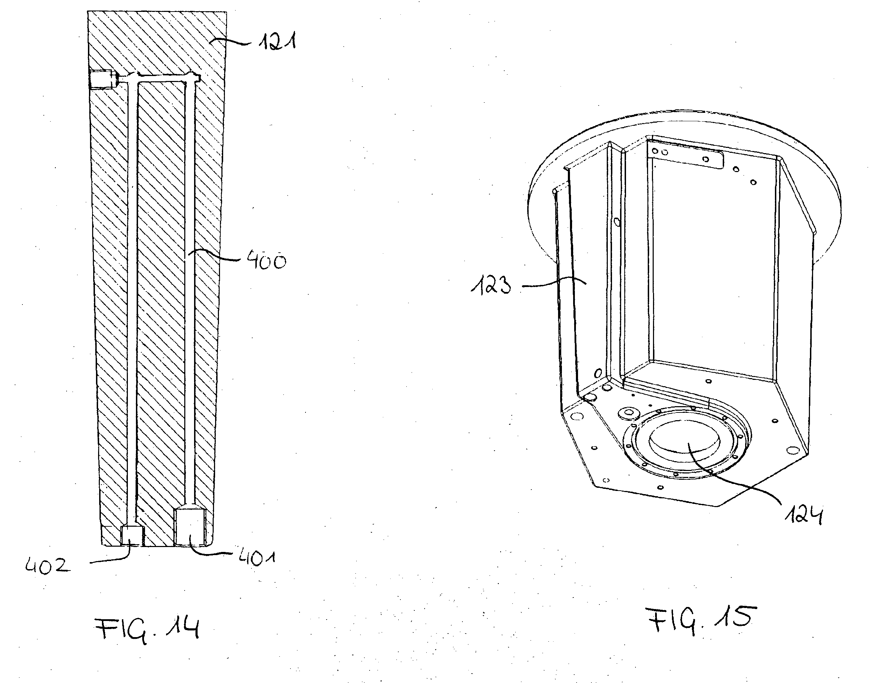

Therefore, each of the cavities comprises a dedicated drainage system for wax and a separate dedicated drainage system for reagents. Both drainage systems can have the same configuration. The configuration of such a drainage system is exemplary shown in fig. 14. Fig. 14 shows a cross-section along the wall 121 of the cavity 104. Preferably the drainage system comprises a U-shaped drainage hole 400 where the cavity external inlet/outlet 401 and the cavity internal inlet/outlet 402 of the drainage hole 400 are positioned at the bottom 122 of the cavity 104. Thereby, a siphon effect can be created that stops eventual leakage in case of breakage of the external connecting tubes or the gear pump. As already explained, similar but separate drainage systems can be used to fill in the wax and the reagent into the container.

In a preferred embodiment the thermal energy generating device is positioned in close proximity to the wax drainage system, so that the wax is constantly warmed to avoid clogs. Thereby the wax is constantly kept fluid. A possible configuration is shown in fig. 15, where a protrusion 123 is provided at the cavity wall. Within this protrusion the drainage system can be provided and, in case of the wax drainage system, additionally a resistive heating element can be included.

The cavity 104 according to the present invention preferably is made of aluminum which allows a fast and uniform heating transfer. However, since aluminum material is inductive and prevents the use of magnetic stirrers motors to mix, the base 124 of the cavity 104 can be made of a stainless steel insert placed in the center, for example having a diameter of 70 mm when using a cavity with the dimensions as explained above.

The main advantages of the present invention can be described as follows: The system according to the present invention applies microwave radiation and heat to a single cavity which also serves as a processing cavity into which cassettes for holding the organic specimen(s) can be placed and fluid reagents can pumped in and out. The processing is automated by applying microwave radiation and heat to reagents that are sequentially pumped in and out of the cavity. This allows for a greater number of samples to be prepared rapidly simultaneously. The wax impregnation can be performed at reduced pressures of within the range 50-900 mBar, for example 100 mBar. The cassette rack can hold a large number of cassettes and tissue samples of various thicknesses that can be simultaneously processed. A magnetic agitation (stirring) can be carried out for all steps with the exception of the vacuum drying step. The rotational speed of the stirrer can be controlled automatically. The cavity is used for all steps such as impregnation step, i.e. the fixation, alcohol rinsing, dehydration and clearing including the vacuum drying.

The system of the present invention allows for the combined rapid microwave fixation, decalcification and processing of bone and bone marrow tissues. The microwave energy accelerates the complete tissue histology sample preparation from the first fixation step to the final wax infiltration. Bone tissue samples requires that the calcium must be removed prior to the sectioning of tissue for microscopic analysis. In prior art it is known that microwave irradiation of tissue samples will accelerate the process of decalcification and fixation, when compared to routinely accepted bench tissue specimen processing methods. The decalcification step is normally carried out with mixture of acids (formic, nitric, hydrochloric) at low percentage (normally below 20%). In system of the present invention, the flexibility of the reagent containers allows the use of decalcifying acid in one of the front containers, to obtain the complete preparation of bone tissue sample, combining fixation, decalcification and histology processing in one unit.

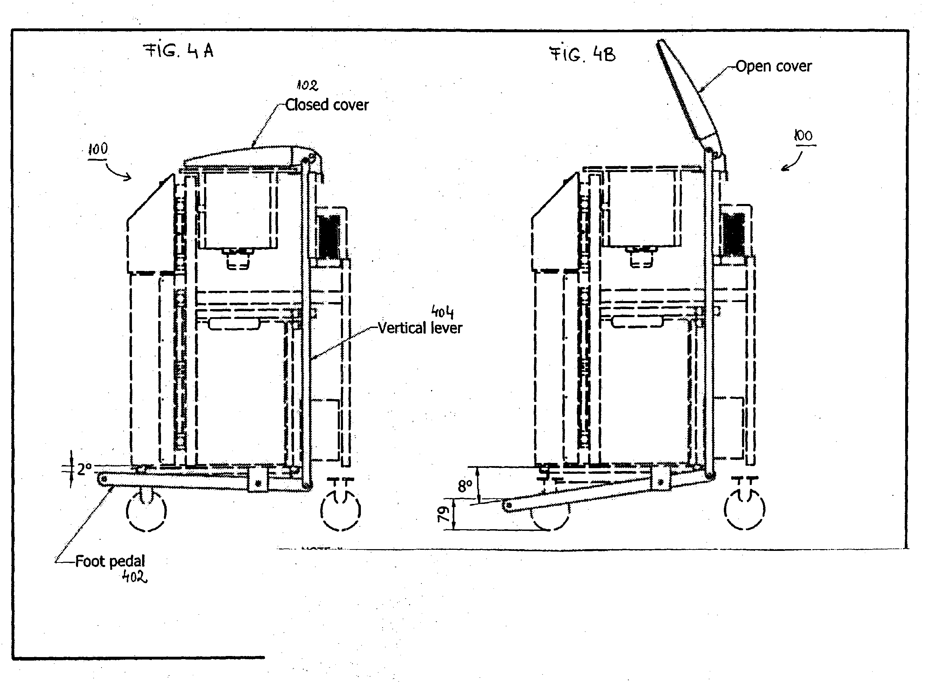

Fig. 4 shows on further detail the exemplary device for carrying out the present invention.

The system for processing tissue specimens 100, illustrated in Fig. 1, is shown in further detail in FIG. 4, regarding its constituent parts.

The system for processing tissue specimens 100 that comprises at least a cover 102 is shown in a first lateral view with said cover 102 in closed state. To facilitate the insertion of the tissue samples, manual insertion of said samples by a user is effected through said door 102, while the door is auctioned by a mechanical foot pedal 402 interconnected with the door 102 by means of a vertical lever 404. By facilitating that the user may act upon the door with the foot, the user may have its hands free for other purposes.

Initially it is envisioned that the foot pedal is in a position approximately parallel with the plane of the surface where the unit 100 is located, only slightly inclined versus said surface as to facilitate a good engagement between the foot pedal and the foot of the user. As shown in the exemplary embodiment of Fig. 4, a deflection angle of approximately 2 degrees may be present between the horizontal plane of the surface where the unit 100 is located and the foot pedal 402.

Once the user acts upon the foot pedal 402, changing/enlarging therefore its inclination angle up to 8 degrees deflection angle, a mechanism 404 that consists at least of a vertical lever will engage the door 102 and the door will be opened, facilitating therefore the insertion of the samples subject to analysis manually by the user. In an alternative embodiment, the cover 102 has built in a rack sample holder, and as such leaves the users' hands free for other applications. As exemplarily shown in FIGs. 4, the foot pedal is conveniently placed at the bottom of unit 100 as such that it does not allow for a deflection angle that will interfere with the movement in horizontal plane of the unit.

The closing mechanism could have as well a spring load to ensure a correct microwave and vacuum parameters within the enclosed cavities.

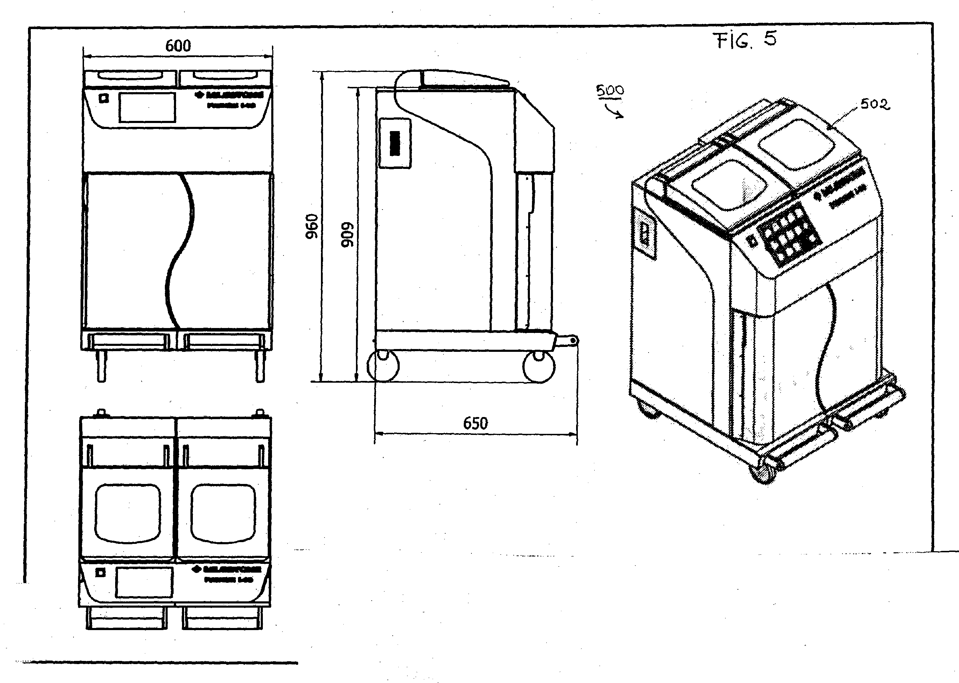

Fig. 5 shows another exemplary device for carrying out the present invention.

The system for processing tissue specimens 500, that comprises at least all the features previously discussed in the present document in connection with FIG. 1, allows a user direct access to the wax storage cavity through an additional door 502 that covers the wax storage cavity 212.

The cover 502 over the wax storage cavity 212 allows easy loading of paraffin pellets by an operator that operates said door either manually or through a foot pedal (not shown). Further, the presence of direct access to the wax storage cavity by a user through said door 502 also facilitates the Dual or Parallel processing of samples in semi-automatic mode by said system for processing tissue specimens 500.

When the system for processing tissue specimens 500 is programmed to function in parallel processing, the operator manually or automatically loads the rack of samples in the cavity 104 that may function both as microwave and thermal cavity, and the steps of fixation, rinsing, dehydration, clearing and evaporation under vacuum conditions are performed as discussed above in connection with an exemplary method for the present invention. At the end of the drying step, the rack can be manually transferred into the second, wax storage, cavity to complete the final impregnation phase, under vacuum. The wax storage cavity may be connected to the vacuum circuit to allow an optimal infiltration with vacuum (down to 100mBar) for the larger sample blocks.

When the first rack is transferred to the wax storage cavity, a second rack can be loaded to the main microwave/thermal cavity to start a second program run. The first cassettes batch must complete the wax impregnation step in the second cavity before the second cassettes batch completes the reagents/drying steps in the first cavity. The protocol time of the second run cannot exceed the wax infiltration time of the first run in order to avoid overlapping the two cycles. At the completion of the impregnation in the second cavity, the first cassettes batch is removed from the wax. The second cassettes batch can complete the wax impregnation phase by a manual transfer in the second cavity. At this point it is possible to start the processing of a third batch of samples in the first cavity to continue parallel processing.

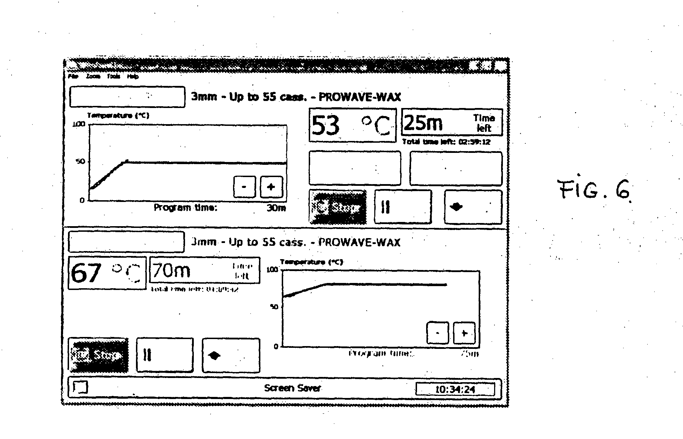

To allow a dual/parallel processing, the software is adapted to accommodate two protocols run in the same screen, for example as illustrated in Fig. 6. In Fig. 6 the top part of the screen controls the reagents steps in the microwave cavity and the bottom part of the screen controls the wax infiltration in the wax cavity.

This parallel process can increase up to 40% the productivity (sample processed per hours).

As illustrated in Fig. 6 that represents a screenshot of software operating on a tissue processing device in accordance with the above described embodiment of the present invention, two different protocols run concomitantly on the same screen, exemplarily located on the lower side of the screen and on the upper side of the screen. The various temperature and time sensors feed information into the respective modules, information that is displayed in an intuitive manner for the benefit of the user as illustrated by Fig. 6.

Referring back to the exemplary screen shot illustrated by Fig. 6 it is of note to remark that the worldwide histology laboratories are facing problems related to the small number of available qualified histotech specialists. This problem that involves less well trained and experienced personnel has as an undesirable consequence the increase of potential human error in the sample preparation steps.

One of the solution to reduce the human potential error during the instrument's operation, is to provide its users a user centric software interface.

It is envisioned that the system proposed by the present invention is provided with an easy to use icon driven software as well an intuitive protocols screen that allow a single touch selection for the most used programs.

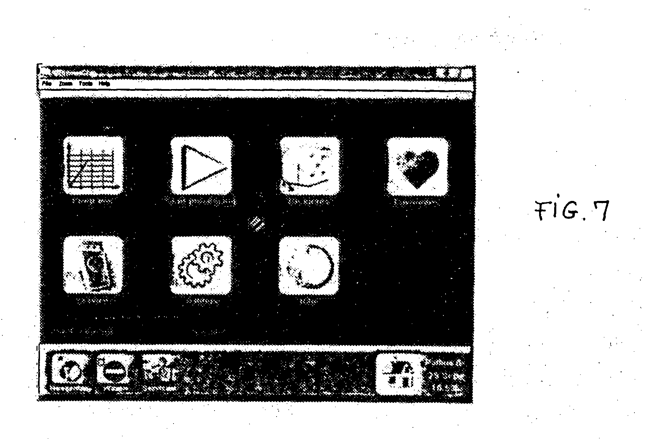

A screen shot of such user friendly intuitive screen is provided in Fig. 7.

The software user interface is also built to recreate the most common software of the electronic personal devices (i.e. cell phones), in order to help the operator with a more "friendly feeling". It has been demonstrated that a difficult to understand software it is more difficult to learn and remember, therefore leading to more errors in the course of its day to day use.

The touch screen user interface who's screen shot is illustrated in Fig. 7 will provide a plurality of easy to use intuitive icons, such as an icon that act as interface with programs, start processing, reagents, favourites, service, seating's, and info. Said user interface is envisioned to be user friendly and customisable to the user's specification with icons that re mostly used during daily operations.

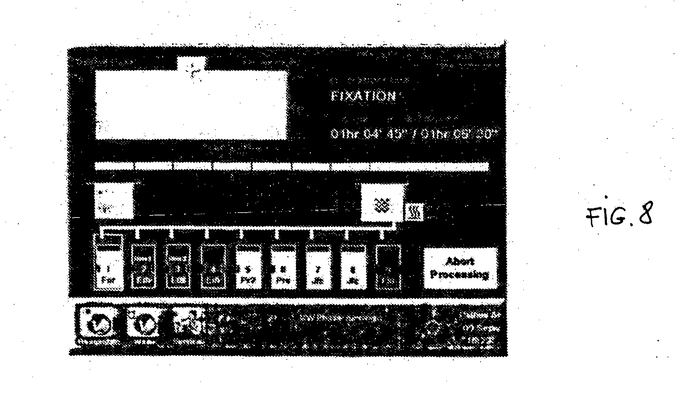

An example of a screen shot that a user might experience and use if the icon processing is acted upon is represented in Fig. 8. As it may be observed from the figure, the user can easily and intuitively follow the processes that take place and at any time it may exactly identify which phase of the sample tissue processing has been completed. Temperature time and reagent levels, among others may be easily observed in one easy to asses view.

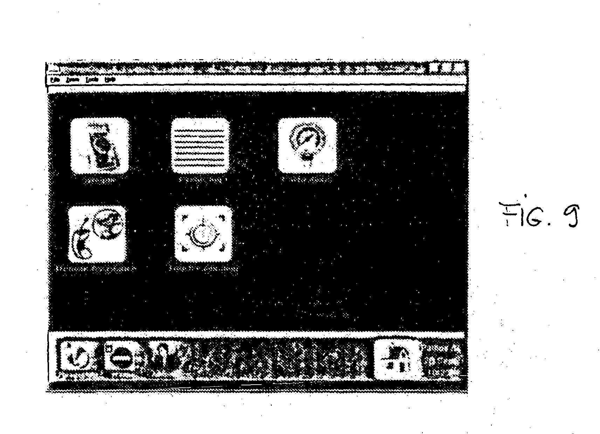

The continuing improvement of the Internet technologies facilitate the remote monitoring of the system's instrumentation and software. The software embedded in the system of the present invention is provided among others with a feature that facilitates remote assistance dial up, as it may be observed in the screen shot of FIG. 9.

For example, Via Internet, after receiving authorization from the senior operator, the system's software can be connected to a customer service center located remotely, for example at the manufacturing facility. This feature can be helpful to update the instrument software with the latest versions or to add new protocols. The peculiarity of the remote assistance software of the invention is the possibility to control all the components and operation of the instruments (i.e. moving reagents in/out the cavities, start a mw step etc.) for a more accurate unit test and troubleshooting in case of technical problems.

While the invention has been disclosed in connection with the embodiments shown and described in detail, various equivalents, modifications, and improvements will be apparent to one of ordinary skill in the art from the above description. Such equivalents, modifications, and improvements are intended to be encompassed by the claims set forth hereinafter.

### Legend:

100: system for processing tissue specimens;
102: cover;
104: cavity for processing tissue specimens;
106: control panel;
108: on/off button;
110: removable reagent containers;
112: access door;
120: microwave guideline entrance;
121: wall of cavity;
122: bottom of cavity;
123: protrusion in the wall of the cavity;
124: base of cavity;
130: preset temperature curve;
140: power curve;
202: microwave generating device;
204: cavity thermal energy generating device;
205a: first resistive heating element;
205b: second resistive heating element;
206: valve(s);
208: gear pump;
210: by-pass;
212: wax storage container;
214: air filter;
216: pressure transducer;
218: rotary valve;
220: external quick coupling;
222: waste tank;
224: cooltrap;
226: condenser;
228:vacum pump;
230: silicone tube, vacuum circuit;
232: cooper tube;
234: tubing, fluid circuit,
236: tubing, air/vacuum circuit;
400: drainage hole;
401: cavity external inlet/outlet; and
402: cavity internal inlet/outlet.

## Claims

1. A system (100) for processing tissue specimens, comprising:
at least one cavity (104) comprising a sidewall (121) and a bottom (122) for processing said tissue specimens, wherein the at least one cavity (104) is connected to a microwave generating device (202) for applying microwave radiation to an inside of the at least one cavity (104),
at least a resistive heating element (205) functionally connected to the at least one cavity (104), wherein said resistive heating element (205) is provided within the sidewall (121) of the cavity (104), and
a fluid transfer system comprising separate transfer systems for the wax and for the reagents to transfer at least one of a plurality of fluids from a plurality of storage containers comprising reagent containers (110) and a wax storage container (212) to the inside and out of the at least one cavity (104), wherein the fluids comprise at least a reagent and molten wax, by directly pumping the fluid in and out of the at least one cavity (104), wherein by means of the separate transfer systems the used reagents are drained back to the respective container (110) from which these have been pumped into the cavity (104) or to a waste tank (222) and the wax is returned to the wax storage container (212), and **characterized in that** the at least one cavity (104) further comprises a dedicated drainage system for wax and a separate dedicated drainage system for reagents, each of said drainage systems comprises a U-shaped drainage hole (400) within the sidewall (121) of the cavity (104) having the cavity external inlet/outlet (401) and the cavity internal inlet/outlet (402) of the drainage hole positioned at the bottom of the cavity (104).

2. The system (100) of claim 1, wherein said resistive heating element (205) is independent from said microwave generating device, and wherein said system (100) preferably further comprises a control unit for separately controlling the microwave generating device and the thermal energy generating device in order to achieve a desired temperature curve inside the cavity (104).

3. The system (100) of claim 1, wherein said at least one resistive heating element (205) is attached to the cavity (104), also provided within the bottom of the cavity (104), and/or wherein said at least one resistive heating element (205) has a cylindrical shape.

4. The system (100) of claim 3, wherein two resistive heating elements (205) are provided within the wall of the cavity (104) opposite to each other, and said two resistive heating elements (205) extend along at least a part of the wall in a direction parallel to the longitudinal axis of the cavity (104); or wherein four resistive heating elements (205) are provided within the wall of the cavity (104) equidistant to each other, and said four resistive heating elements (205) extend along at least a part of the wall in a direction parallel to the longitudinal axis of the cavity (104); or wherein two resistive heating elements (205) are provided within the wall of the cavity (104) opposite to each other and at least one further resistive heating element (205) is provided within the bottom of the cavity (104), said two resistive heating elements (205) within the wall extending along at least a part of the wall in a direction parallel to the longitudinal axis of the cavity (104).

5. The system (100) of claim 3, wherein the resistive heating element (205) is a flexible resistive sheet attached to the outer wall of the cavity (104), preferably consisting of a conductive silicon material.

6. A method (300) for processing tissue specimens, comprising:
transferring (302) a tissue sample holder of plurality of tissue specimens to at least one cavity (104) comprising a sidewall (121) and a bottom (122) by means of a device;
closing (304) the at least one cavity (104) with a cover coupled to said tissue sample holder;
processing (306) the plurality tissue specimens in the at least one cavity (104);
selectively transferring (308) at least two fluids by means of a fluid transfer system comprising separate transfer systems for the wax and for the reagents from a storage container in and out of the at least one cavity (104), the fluids comprising at least a reagent from a reagent storage container (110) and wax from a wax storage container (212), by sequentially pumping directly in and out of the at least one cavity (104),
applying of microwave radiation and thermal energy (310) produced by resistive heating to the inside of the at least one cavity (104) by means of a microwave generating (202) device and a resistive thermal energy generating device which is provided within the sidewall (121) of the cavity (104) being connected to the at least one cavity (104), wherein by means of the separate transfer systems the used reagents are drained back to the respective container (110) from which these have been pumped into the cavity (104) or to a waste tank (222) and the wax is returned to the wax storage container (212) and **characterized in that** the at least one cavity (104) further comprises a dedicated drainage system for wax and a separate dedicated drainage system for reagents, each of said drainage systems comprises a U-shaped drainage hole (400) within the sidewall (121) of the cavity (104) having the cavity external inlet/outlet (401) and the cavity internal inlet/outlet (402) of the drainage hole positioned at the bottom of the cavity (104).

7. The method (300) of claim 6, further comprising the step of generating a positive energy gradient inside the cavity during a ramping up step of a desired temperature curve employing microwave radiation.

8. The method (300) of claim 7, comprising the steps of measuring the current temperature inside the cavity and employing thermal energy generated by the thermal energy generating device simultaneously to the microwave radiation in case that the measured temperature is lower than the temperature of the desired temperature curve.

9. The method (300) for processing tissue specimens of any of claims 6 to 8, wherein while a first tissue sample holder of a plurality of tissue specimens is transferred into said wax storage cavity (212) a second tissue sample holder of a plurality of tissue specimens is transferred into said microwave cavity, thereby facilitating parallel processing of said first and second plurality of tissue specimens.

## Patentansprüche

1. System (100) zur Verarbeitung von Gewebeproben, das aufweist:
wenigstens einen Hohlraum (104), der eine Seitenwand (121) und einen Boden (122) zur Verarbeitung der Gewebeproben aufweist, wobei der wenigstens eine Hohlraum (104) mit einer Mikrowellenerzeugungsvorrichtung (202) zum Anwenden von Mikrowellenstrahlung an ein Inneres des wenigstens einen Hohlraums (104) verbunden ist,
wenigstens ein Widerstandsheizelement (205), das funktional mit dem wenigstens einen Hohlraum (104) verbunden ist, wobei das Widerstandsheizelement (205) innerhalb der Seitenwand (121) des Hohlraums (104) bereitgestellt ist, und ein Fluidüberführungssystem, das getrennte Überführungssysteme für das Wachs und für die Reagenzien aufweist, um wenigstens eines von mehreren Fluiden aus mehreren Lagerbehältern, die Reagenzbehälter (110) und einen Wachslagerbehälter (212) aufweisen, in das Innere des wenigstens einen Hohlraums (104) und aus diesem heraus zu überführen, wobei die Fluide wenigstens ein Reagenz und geschmolzenes Wachs aufweisen, indem das Fluid direkt in den wenigstens einen Hohlraum (104) und aus diesem heraus gepumpt wird, wobei die verwendeten Reagenzien mit Hilfe der getrennten Überführungssysteme zurück zu dem jeweiligen Behälter (110), von dem sie in den Hohlraum (104) gepumpt wurden, oder zu einem Abfalltank (222) abgeleitet werden und das Wachs zu dem Wachslagerbehälter (212) zurück geleitet wird, und **dadurch gekennzeichnet, dass**
der wenigstens eine Hohlraum (104) ferner ein dediziertes Ableitsystem für Wachs und ein getrenntes dediziertes Ableitsystem für Reagenzien aufweist, wobei jedes der genannten Ableitsysteme ein U-förmiges Ableitloch (400) innerhalb der Seitenwand (121) des Hohlraums (104) aufweist, wobei der Hohlraumaußeneinlass-/Auslass (401) und der Hohlrauminneneinlass-/Auslass (402) des Ableitlochs auf dem Boden des Hohlraums (104) positioniert sind.

2. System (100) nach Anspruch 1, wobei das Widerstandsheizelement (205) unabhängig von der Mikrowellenerzeugungsvorrichtung ist und wobei das System (100) vorzugsweise ferner eine Steuereinheit aufweist, um die Mikrowellenerzeugungsvorrichtung und die Wärmeenergieerzeugungsvorrichtung getrennt zu steuern, um eine gewünschte Temperaturkurve im Inneren des Hohlraums (104) zu erreichen.

3. System (100) nach Anspruch 1, wobei das wenigstens eine Widerstandsheizelement (205) an dem Hohlraum (104) befestigt ist, ebenfalls in dem Boden des Hohlraums (104) bereitgestellt ist und/oder wobei das wenigstens eine Widerstandsheizelement (205) eine zylindrische Form hat.

4. System (100) nach Anspruch 3, wobei zwei Widerstandsheizelemente (205) in der Wand des Hohlraums (104) entgegengesetzt zueinander bereitgestellt sind und die zwei Widerstandsheizelemente (205) sich entlang wenigstens eines Teils der Wand in eine Richtung parallel zu der Längsachse des Hohlraums (104) erstrecken; oder wobei die vier Widerstandsheizelemente (205) innerhalb der Wand des Hohlraums (104) äquidistant zueinander sind und die vier Widerstandsheizelemente (205) sich entlang wenigstens eines Teils der Wand in eine Richtung parallel zu der Längsachse des Hohlraums (104) erstrecken; oder wobei die zwei Widerstandsheizelemente (205) innerhalb der Wand des Hohlraums (104) entgegengesetzt zueinander bereitgestellt sind und wenigstens ein weiteres Widerstandsheizelement (205) in dem Boden des Hohlraums (104) bereitgestellt ist, wobei die genannten zwei Widerstandsheizelemente (205) sich innerhalb der Wand entlang wenigstens eines Teils der Wand in eine Richtung parallel zu der Längsachse des Hohlraums (104) erstrecken.

5. System (100) nach Anspruch 3, wobei das Widerstandsheizelement (205) eine flexible Widerstandsschicht ist, die an der Außenwand des Hohlraums (104) befestigt ist, die vorzugsweise aus einem leitenden Siliziummaterial besteht.

6. Verfahren (600) zur Verarbeitung von Gewebeproben, das aufweist:
Überführen (302) eines Gewebeprobenhalters für mehrere Gewebeproben an wenigstens einen Hohlraum (104), der eine Seitenwand (121) und einen Boden (122) aufweist, mit Hilfe einer Vorrichtung;
Schließen (304) des wenigstens einen Hohlraums (104) mit einer Abdeckung, die mit der Gewebeprobenhalterung gekoppelt ist;
Verarbeiten (306) der mehreren Gewebeproben in dem wenigstens einen Hohlraum (104);
selektives Überführen (308) von wenigstens zwei Fluiden mit Hilfe eines Fluidüberführungssystems, das getrennte Überführungssysteme für das Wachs und für die Reagenzien aus einem Lagerbehälter und in und aus dem wenigstens einen Hohlraum (104) aufweist, wobei die Fluide wenigstens ein Reagenz aus einem Reagenzlagerbehälter (110) und Wachs aus einem Wachslagerbehälter (212) aufweisen, indem sie nacheinander direkt in den wenigstens einen Hohlraum (104) und aus diesem heraus gepumpt werden,
Anwenden von Mikrowellenstrahlung und Wärmeenergie (310), die durch Widerstandsheizen erzeugt wird, auf das Innere des wenigstens einen Hohlraums (104) mit Hilfe einer Mikrowellenerzeugungsvorrichtung (202) und einer Widerstandswärmeenergieerzeugungsvorrichtung, die innerhalb der Seitenwand (121) des Hohlraums (104) bereitgestellt ist, wobei sie mit dem wenigstens einen Hohlraum (104) verbunden ist, wobei die verwendeten Reagenzien mit Hilfe der getrennten Überführungssysteme zurück zu dem jeweiligen Behälter (110), von dem sie in den Hohlraum (104) gepumpt wurden, oder zu einem Abfalltank (222) abgeleitet werden und das Wachs zu dem Wachslagerbehälter (212) zurück geleitet wird, und **dadurch gekennzeichnet, dass**
der wenigstens eine Hohlraum (104) ferner ein dediziertes Ableitsystem für Wachs und ein getrenntes dediziertes Ableitsystem für Reagenzien aufweist, wobei jedes der genannten Ableitsysteme ein U-förmiges Ableitloch (400) innerhalb der Seitenwand (121) des Hohlraums (104) aufweist, wobei der Hohlraumaußeneinlass-/Auslass (401) und der Hohlrauminneneinlass-/Auslass (402) des Ableitlochs auf dem Boden des Hohlraums (104) positioniert sind

7. Verfahren (300) nach Anspruch 6, das ferner während eines Anlaufschritts den Schritt des Erzeugens eines positiven Energiegradienten im Inneren des Hohlraums auf eine gewünschte Temperaturkurve unter Verwendung von Mikrowellenstrahlung aufweist.

8. Verfahren (300) nach Anspruch 7, das die Schritte des Messens der aktuellen Temperatur im Inneren des Hohlraums und in dem Fall, dass die gemessene Temperatur niedriger als die Temperatur der gewünschten Temperaturkurve ist, des Verwendens von Wärmeenergie, die durch die Wärmeenergieerzeugungsvorrichtung gleichzeitig mit der Mikrowellenstrahlung erzeugt wird, aufweist.

9. Verfahren (300) zur Verarbeitung von Gewebeproben nach einem der Ansprüche 6 bis 8, wobei, während ein erster Gewebeprobenhalter für mehrere Gewebeproben in den Wachslagerbehälter (212) überführt wird, ein zweiter Gewebeprobenhalter mit mehreren Gewebeproben in den Mikrowellenhohlraum überführt wird, wodurch die parallele Verarbeitung der ersten und zweiten mehreren Gewebeproben erleichtert wird.

## Revendications

1. Système (100) pour traiter des prélèvements tissulaires, comprenant :
au moins une cavité (104) comprenant une paroi latérale (121) et un fond (122) pour traiter lesdits prélèvements tissulaires, dans lequel l'au moins une cavité (104) est reliée à un dispositif générateur de micro-ondes (202) pour appliquer un rayonnement micro-onde à un intérieur de l'au moins une cavité (104),
au moins un élément chauffant résistif (205) relié fonctionnellement à l'au moins une cavité (104), dans lequel ledit élément chauffant résistif (205) est placé à l'intérieur de la paroi latérale (121) de la cavité (104), et
un système de transfert de fluide comprenant des systèmes de transfert séparés pour la cire et pour les réactifs pour transférer au moins l'un d'une pluralité de fluides d'une pluralité de récipients de stockage comprenant des récipients de réactif (110) et un récipient de stockage de cire (212) vers l'intérieur et l'extérieur de l'au moins une cavité (104), dans lequel les fluides comprennent au moins un réactif et de la cire fondue, en pompant directement le fluide à l'intérieur et à l'extérieur de l'au moins une cavité (104), dans lequel au moyen des systèmes de transfert séparés, les réactifs utilisés sont retournés vers le récipient (110) respectif à partir duquel ceux-ci ont été pompés dans la cavité (104) ou vers un réservoir d'eaux usées (222) et la cire est renvoyée vers le récipient de stockage de cire (212), et **caractérisé en ce que** l'au moins une cavité (104) comprend en outre un système d'évacuation spécifique pour la cire et un système d'évacuation spécifique séparé pour les réactifs, chacun desdits systèmes d'évacuation comprenant un orifice d'évacuation en U (400) à l'intérieur de la paroi latérale (121) de la cavité (104), l'entrée/la sortie externe de cavité (401) et l'entrée/la sortie interne de cavité (402) de l'orifice d'évacuation étant positionnées au fond de la cavité (104).

2. Système (100) selon la revendication 1, dans lequel ledit élément chauffant résistif (205) est indépendant dudit dispositif générateur de micro-ondes, et dans lequel ledit système (100) comprend en outre de préférence une unité de commande pour commander séparément le dispositif générateur de micro-ondes et le dispositif générateur d'énergie thermique afin d'atteindre une courbe de température souhaitée à l'intérieur de la cavité (104).

3. Système (100) selon la revendication 1, dans lequel ledit au moins un élément chauffant résistif (205) est attaché à la cavité (104), également placé dans le fond de la cavité (104), et/ou dans lequel ledit au moins un élément chauffant résistif (205) a une forme cylindrique.

4. Système (100) selon la revendication 3, dans lequel deux éléments chauffants résistifs (205) sont placés à l'intérieur de la paroi de la cavité (104), face à face, et lesdits deux éléments chauffants résistifs (205) s'étendent le long d'au moins une partie de la paroi dans une direction parallèle à l'axe longitudinal de la cavité (104) ; ou dans lequel quatre éléments chauffants résistifs (205) sont placés à l'intérieur de la paroi de la cavité (104) à égale distance les uns des autres, et lesdits quatre éléments chauffants résistifs (205) s'étendent le long d'au moins une partie de la paroi dans une direction parallèle à l'axe longitudinal de la cavité (104) ; ou dans lequel deux éléments chauffants résistifs (205) sont placés à l'intérieur de la paroi de la cavité (104) face à face et au moins un autre élément chauffant résistif (205) est placé dans le fond de la cavité (104), lesdits deux éléments chauffants résistifs (205) à l'intérieur de la paroi s'étendant le long d'au moins une partie de la paroi dans une direction parallèle à l'axe longitudinal de la cavité (104).

5. Système (100) selon la revendication 3, dans lequel l'élément chauffant résistif (205) est une feuille résistive souple attachée à la paroi externe de la cavité (104), constituée de préférence d'un matériau de silicium conducteur.

6. Procédé (300) pour traiter des prélèvements tissulaires, comprenant :
le transfert (302) d'un porte-échantillon tissulaire ayant une pluralité de prélèvements tissulaires vers au moins une cavité (104) comprenant une paroi latérale (121) et un fond (122) au moyen d'un dispositif ;
la fermeture (304) de l'au moins une cavité (104) avec un couvercle couplé audit porte-échantillon tissulaire ;
le traitement (306) de la pluralité de prélèvements tissulaires dans l'au moins une cavité (104) ;
le transfert sélectif (308) d'au moins deux fluides au moyen d'un système de transfert de fluides comprenant des systèmes de transfert séparés pour la cire et pour les réactifs depuis un récipient de stockage à l'intérieur et hors de l'au moins une cavité (104), les fluides comprenant au moins un réactif provenant d'un récipient de stockage de réactif (110) et de la cire provenant d'un récipient de stockage de cire (212), par pompage séquentiel directement à l'intérieur et hors de l'au moins une cavité (104),
l'application de rayonnement micro-onde et d'énergie thermique (310) produite par chauffage résistif à l'intérieur de l'au moins une cavité (104) au moyen d'un dispositif générateur de micro-ondes (202) et d'un dispositif générateur d'énergie thermique résistive qui est placé à l'intérieur de la paroi latérale (121) de la cavité (104), étant branché à l'au moins une cavité (104), dans lequel au moyen des systèmes de transfert séparés, les réactifs utilisés sont retournés vers le récipient respectif (110) à partir duquel ceux-ci ont été pompés dans la cavité (104) ou vers un réservoir d'eaux usées (222) et la cire est renvoyée vers le récipient de stockage de cire (212) et **caractérisé en ce que** l'au moins une cavité (104) comprend en outre un système d'évacuation spécifique pour la cire et un système d'évacuation spécifique séparé pour les réactifs, chacun desdits systèmes d'évacuation comprenant un orifice d'évacuation en U (400) à l'intérieur de la paroi latérale (121) de la cavité (104), l'entrée/la sortie externe de cavité (401) et l'entrée/la sortie interne de cavité (402) de l'orifice d'évacuation étant positionnées au fond de la cavité (104).

7. Procédé (300) selon la revendication 6, comprenant en outre l'étape de génération d'un gradient d'énergie positif à l'intérieur de la cavité lors d'une étape de croissance d'une courbe de température souhaitée en employant un rayonnement micro-onde.

8. Procédé (300) selon la revendication 7, comprenant les étapes de mesure de la température actuelle à l'intérieur de la cavité et d'utilisation de l'énergie thermique générée par le dispositif générateur d'énergie thermique simultanément au rayonnement micro-onde dans le cas où la température mesurée est inférieure à la température de la courbe de température souhaitée.

9. Procédé (300) pour traiter des prélèvements tissulaires selon l'une quelconque des revendications 6 à 8, dans lequel alors qu'un premier porte-échantillon tissulaire ayant une pluralité de prélèvements tissulaires est transféré dans ladite cavité de stockage de cire (212), un second porte-échantillon tissulaire ayant une pluralité de prélèvements tissulaires est transféré dans ladite cavité à micro-ondes, facilitant ainsi le traitement parallèle de ladite première et de ladite seconde pluralité de prélèvements tissulaires.
